# EUROPÄISCHE PATENTSCHRIFT

(11) **EP 2 980 031 B1**
(45) Veröffentlichungstag und Bekanntmachung des Hinweises auf die Patenterteilung: **21.12.2016**
(21) Anmeldenummer: 15176572.4
(22) Anmeldetag: 14.07.2015
(51) Int. Cl.: C03B 1/00, C03C 1/00, C03B 3/00, C03B 3/02

(54) **VERFAHREN ZUR BESCHICKUNG EINER GLASSCHMELZANLAGE MIT AUS SCHERBEN UND ROHSTOFFGEMENGE BESTEHENDEN SCHÜTTGÜTERN UND VORRICHTUNG ZUR DURCHFÜHRUNG DES VERFAHRENS**
METHOD FOR FEEDING A GLASS FURNACE WITH BULK MATERIAL CONSISTING OF CULLET AND RAW MATERIALS AND DEVICE FOR CARRYING OUT SAID METHOD
PROCEDE DE CHARGEMENT D'UN MELANGE VITRIFIABLE COMPOSE DE MATIERES PREMIERES ET DE CALCIN DANS UN FOUR VERRIER, ET DISPOSITIF DE REALISATION DUDIT PROCEDE

(30) Priorität: 28.07.2014 DE 102014010914
(43) Veröffentlichungstag der Anmeldung: 03.02.2016
(73) Patentinhaber: Beteiligungen Sorg GmbH & Co. KG, 97816 Lohr am Main (DE)
(72) Erfinder: Lindig, Dr. Matthias, 55218 Ingelheim (DE); Bonfig, Karl, 97299 Zell am Main (DE); Eidmann, Clemens, 97080 Würzburg (DE)
(74) Vertreter: Keil & Schaafhausen Patent- und Rechtsanwälte PartGmbB

(56) Entgegenhaltungen:
- US-A- 3 753 743
- US-A- 4 876 480
- US-A- 5 123 942
- DATABASE WPI Week 198551 1985 Thomson Scientific, London, GB; AN 1985-319317 XP002751680, -& JP S60 221327 A (ASAHI GLASS CO LTD) 6. November 1985 (1985-11-06)

## Beschreibung

Die Erfindung betrifft ein Verfahren zur Beschickung einer Glasschmelzanlage mit aus Scherben und Rohstoffgemenge bestehenden Schüttgütern gemäß dem Oberbegriff des Anspruchs 1 und eine Vorrichtung zur Durchführung des Verfahrens gemäß dem Oberbegriff des Anspruchs 6.

Bei der Herstellung von Glasprodukten besteht das der Glasschmelzanlage kontinuierlich zugeführte Schmelzgut aus Scherben und primären Rohstoffen (Rohstoffgemenge). Die Scherben können aus dem Rücklauf fehlerhafter Produktionen stammen und/oder sogenannte Recyclingscherben sein.

Aus der Druckschrift JP S60 221327 A ist ein Vorwärmverfahren von Ausgangsstoffen für die Glasherstellung bekannt, bei dem Glasscherben und Rohstoffe einem Mischer mit einer Mischerwalze zugeführt werden.

Die Zugabe der Scherben zum Schmelzprozess hat einen wichtigen positiven Einfluss auf das Abschmelzverhalten und den Energieverbrauch der Glasschmelzanlage. Die Scherbenzugabe beschleunigt den gesamten Abschmelzprozess und reduziert den Bedarf an Energie. Das Gemisch aus dem Rohstoffgemenge allein ohne Scherbenzusatz zur Herstellung der Glasschmelze erfordert einen deutlich höheren Energiebedarf. 10 Gew.-% Scherbenzugabe reduzieren in der Behälterglasherstellung den Energiebedarf um etwa 3%. Es ist dabei allerdings erforderlich, dass das Verhältnis von Rohstoffgemenge und Scherben in einem engen Schwankungsbereich kontrolliert und eingehalten wird. Schwankende Verhältnisse würden auch einen schwankenden Bedarf an Schmelzenergie bedeuten.

Das Verhältnis wird in der Regel in einem offenen System über Dosierschnecken oder über eine einfache Verwiegung eingestellt. Das Silo vor der Glasschmelzanlage wird zur Bevorratung entsprechend mit den Scherben und dem Rohstoffgemenge beschickt. Die beiden Komponenten liegen in Schichten im Silo aufeinander. Bei der Entnahme kommt es zu einer ausreichenden Durchmischung beider Komponenten.

Eine weitere Energieeinsparung kann dadurch erreicht werden, dass den Scherben und dem Rohstoffgemenge über einen Wärmetauscher aus den heißen Abgasen der Glasschmelzanlage Wärme zugeführt wird.

Bei einem hohen verfügbaren Anteil an Scherben ist es wirtschaftlich sinnvoll, die Nutzwärme nur auf den Scherbenstrom zu übertragen. In diesem Fall müssen allerdings die Scherben bis zur Übergabe an die Glasschmelzanlage von der zweiten Komponente, dem Rohstoffgemenge, getrennt sein. Außerdem müssen die Stoffströme vor Eintritt in die Glasschmelzanlage in einem bestimmten Masseverhältnis zusammengeführt werden. Eine offene Verwiegung verbietet sich dabei, weil damit den vorgewärmten Scherben die Wärme wieder entzogen würde. Zudem ist mit einer erheblich Verstaubung in dem Bereich der Übergabe und Vermischung zu rechnen.

Aufgabe der vorliegenden Erfindung ist es daher, ein Verfahren und eine Vorrichtung zu schaffen, mit denen Scherben, insbesondere heiße Scherben, und ein Rohstoffgemenge vor dem Übergabepunkt der beiden Stoffströme an die Glasschmelzanlage in einem bestimmten Mengenverhältnis und unter Vermeidung einer erheblichen Verstaubung im Übergabebereich zusammengeführt werden.

Diese Aufgabe wird mit den kennzeichnenden Merkmalen der Ansprüche 1 und 6 gelöst. Gemäß der Lehre des erfindungsgemäßen Verfahrens werden die beiden Stoffströme aus Scherben und Rohstoffgemenge aus zwei voneinander getrennten Bevorratungsbehältern (erster und zweiter Bevorratungsbehälter) in einem kontinuierlichen Durchlaufprozess zusammengeführt. Ein wesentliches erfinderisches Merkmal ist dabei, dass das Rohstoffgemenge mittels einer abgeschlossenen, staubdichten Dosiervorrichtung aus seinem Bevorratungsbehälter (zweiter Bevorratungsbehälter) direkt in den Bevorratungsbehälter der Scherben (erster Bevorratungsbehälter) zwangsgefördert wird. Dabei lassen sich nicht nur die Mengenverhältnisse der beiden Stoffströme relativ genau zueinander einstellen, sondern man verhindert auch eine ungewünschte Staubentwicklung.

Dem ersten Bevorratungsbehälter für die Scherben wird über einen Wärmetauscher aus den heißen Abgasen der Glasschmelzanlage Wärme zugeführt. Damit werden die Scherben vorgewärmt, was zu einer beträchtliche Energieeinsparung führt.

Um die Einstellung und Einhaltung eines bestimmten Mengenverhältnisses zwischen den beiden Stoffströmen zu erleichtern, ist erfindungsgemäß vorgesehen, dass die Entnahmevorrichtung unterhalb des ersten Bevorratungsbehälters für die Scherben zusätzlich zu den in dem Behälter nach unten rutschenden Scherben bei jeder Förderung über die gleichzeitig arbeitende Dosiervorrichtung auch Rohstoffgemenge in einem bestimmten Masseverhältnis aus dessen zweiten Bevorratungsbehälter mitzieht.

Erfindungsgemäß ist vorgesehen, dass die Vorrichtung zwischen dem ersten Bevorratungsbehälter und dem zweiten Bevorratungsbehälter eine Entnahme- und Fördervorrichtung (Dosiervorrichtung) für die Zudosierung des Rohstoffgemenges in den ersten Bevorratungsbehälter aufweist. Die Dosiervorrichtung ist unterhalb des Auslaufs des zweiten Bevorratungsbehälters angeordnet. Mittels der Dosiervorrichtung wird das Rohstoffgemenge in den ersten Bevorratungsbehälter zwangsgefördert.

Es hat sich als zweckmäßig erwiesen, dass die Gesamtentnahmemenge des Gemisches aus Scherben und Rohstoffgemenge durch eine Messung des Niveaus der Glasschmelze in der Glasschmelzwanne mittels einer Niveausonde während des in dem sich anschließenden kontinuierlich arbeitenden Durchlaufprozess (Fertigungsmenge) geregelt wird.

Gemäß einer Ausführungsform der Erfindung ist vorgesehen, dass der restliche Bedarf der Gesamtentnahmemenge durch freies Nachfließen des Materials in dem Bevorratungsbehälter für die Scherben gedeckt wird.

Es hat sich ferner als vorteilhaft erwiesen, dass die Zudosierung des aus dem Bevorratungsbehälter zwangsgeförderten Rohstoffgemenges direkt in den Entnahmetrichter des Bevorratungsbehälters für die Scherben erfolgt.

Ein besonderer Vorteil der erfindungsgemäßen Vorrichtung besteht darin, dass die Dosiervorrichtung, mit der das Rohstoffgemenge in den ersten Bevorratungsbehälter für die Scherben zugeführt wird, nach außen abgeschlossen ist. Damit wird eine unerwünschte Staubentwicklung vermieden.

Die Zufuhr des Rohstoffgemenges zu dem Scherbenfluss wir erfindungsgemäß dadurch erleichtert, dass in dem ersten Bevorratungsbehälter für die Scherben die Dosiervorrichtung, welche die Zuführung des Rohstoffgemenges umfasst, mit einer dachförmigen Überdeckung überbaut ist. Damit kann der zwangsgeförderte Rohstoffgemengestrom ungehindert in den Scherbenstrom fallen.

Je nach der erforderlichen Durchsatzleistung der Glasschmelzanlage kann der zweite Bevorratungsbehälter für das Rohstoffgemenge erfindungsgemäß auch über zwei oder mehr Ausläufe verfügen. Zweckmäßigerweise ist dabei für jeden Auslauf in dem zweiten Bevorratungsbehälter für das Rohstoffgemenge in dem ersten Bevorratungsbehälter für die Scherben eine Zuführung für die Zudosierung des Rohstoffgemenges ausgebildet.

Es hat sich weiterhin als vorteilhaft erwiesen, dass sich der ersten Bevorratungsbehälter für die Scherben nach unten in zwei oder mehr voneinander getrennte Schächte zur Durchleitung von Teilströmen des Beschickungsguts verjüngt. Damit wird das Rohstoffgemenge noch effektiver von dem Scherbenstrom mitgezogen.

Die Zudosierung des Rohstoffgemenges zu dem Scherbenstrom kann in Abhängigkeit von den örtlichen Gegebenheiten und der erforderlichen Durchsatzleistung an unterschiedlichen Stellen erfolgen. So kann die Zudosierung direkt in den Scherbenstrom erfolgen. Die Zudosierung des Rohstoffgemenges kann erfindungsgemäß aber auch zwischen zwei Teilströmen des Scherbenstroms mittig erfolgen. Schließlich kann die Zudosierung des Rohstoffgemenges auch seitlich zum Scherbenstrom erfolgen.

Als besonders vorteilhaft hat es sich erwiesen, dass die Dosiervorrichtung an ihrem vor der Abwurfstelle gelegenen Ende, d.h. an dem in Richtung des ersten Bevorratungsbehälter gelegenen Ende, einen trichterförmigen Zuführkanal, vorzugsweise mit der oben bereits erwähnten dachförmigen Überdeckung, aufweist, welcher das Rohstoffgemenge in vertikaler Richtung lenkt und dem Scherbenstrom vertikal zuführt. Insbesondere kann der Zuführkanal einen elliptischen, rechteckigen Querschnitt (in horizontaler Richtung) oder einen Querschnitt (in horizontaler Richtung) in Form eines Vielecks aufweisen. Hierdurch wird bewirkt, dass das Rohstoffgemenge besser in dem Gemisch verteilt und besser in der Breite des Querschnittes im Scherbenstrom abgelegt wird. Besonders vorteilhaft ist, wenn der Zuführkanal, beispielsweise durch eine entsprechende Ausbildung der Form der Unterseite des Zuführkanals, die Bildung eines Scherbenkegels unterhalb des Endes des Zuführkanals (Abwurfstelle) verursacht. Ein derartiger Scherbenkegel zwingt das abgeworfene Rohstoffgemenge seitlich links und rechts auf dem Kegel abzufließen, so dass eine noch bessere Verteilung des Rohstoffgemenges in dem Gemisch erreicht wird. Die Unterseite kann hierfür beispielsweise eine rund oder eckig verlaufende, nach oben gerichtete Einkerbung oder Einschnürung aufweisen.

Es ist außerdem von Vorteil, wenn mindestens zwei Entnahmevorrichtungen vorgesehen sind, welche (in horizontaler Richtung) nebeneinander angeordnet sind. Diese können das Gemisch über eine größere Breite in Richtung Glasschmelzanlage fördern. Insbesondere bei dieser Ausführungsform ist die oben angegebene Ausbildung der Dosiervorrichtung mit dem trichterförmigen Zuführkanal von Vorteil.

Weitere Ausgestaltungen der Erfindung sind in den Unteransprüchen beschrieben.

Weitere Merkmale, Vorteile und Anwendungsmöglichkeiten der Erfindung ergeben sich aus der nachfolgenden Beschreibung von Ausführungsbeispielen, die in der Zeichnung dargestellt sind.

Es zeigen
- Fig. 1: in einem Diagramm ein Regelschema der erfindungsgemäßen Beschickungsvorrichtung,
- Fig. 2: einen Längsschnitt durch eine erste Ausführungsform einer erfindungsgemäßen Beschickungsvorrichtung,
- Fig. 3: einen Querschnitt durch die in Fig. 2 dargestellte Beschickungsvorrichtung,
- Fig. 4: einen Schnitt entlang der Linie AA durch die in Fig. 2 dargestellte Beschickungsvorrichtung,
- Fig.5: einen Querschnitt durch eine zweite Ausführungsform einer erfindungsgemäße Beschickungsvorrichtung,
- Fig. 6: einen Querschnitt durch eine dritte Ausführungsform einer erfindungsgemäßen Beschickungsvorrichtung,
- Fig. 7: einen Querschnitt durch eine vierte Ausführungsform einer erfindungsgemäßen Beschickungsvorrichtung,
- Fig. 8: einen Längsschnitt (siehe AA in Fig. 9) durch eine fünfte Ausführungsform einer erfindungsgemäßen Beschickungsvorrichtung,
- Fig. 9: einen Querschnitt durch die in Fig. 8 dargestellte Beschickungsvorrichtung,
- Fig. 10: einen Schnitt entlang BB (siehe Fig. 8) durch die in Fig. 8 und 9 dargestellte Beschickungsvorrichtung,
- Fig. 11: eine alternative Möglichkeit für die Ausführung eines Zuführkanals in einem Längsschnitt analog Fig. 8 und
- Fig. 12: eine weitere alternative Möglichkeit für die Ausführung des Zuführkanals in einem Längsschnitt analog Fig. 8.

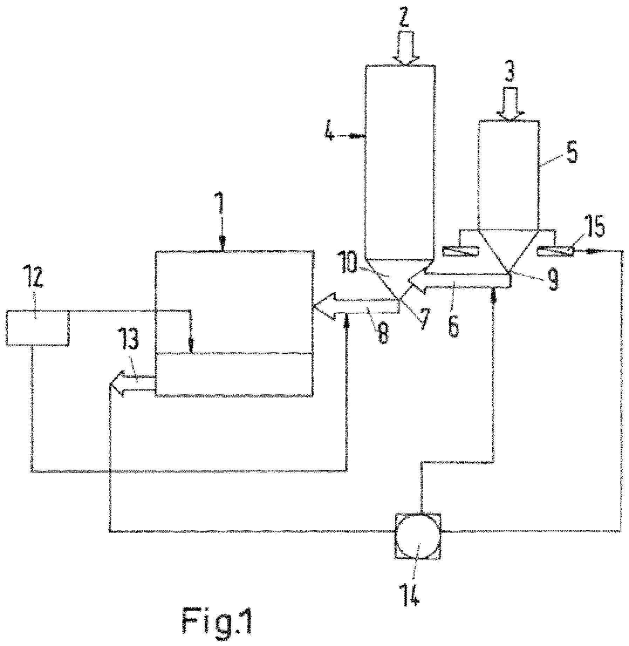

Das in Fig. 1 dargestellte Regelschema veranschaulicht Aufbau und Funktionsweise der Vorrichtung zur Beschickung einer Glasschmelzanlage 1 mit aus Scherben 2 und primären Rohstellen (Rohstoffgemenge) 3 bestehenden Schüttgütern. Das Silo für die Bevorratung des Beschickungsgutes besteht aus zwei Bevorratungsbehältern 4 und 5. Der erste Bevorratungsbehälter 4 dient zur Aufnahme der Scherben 2, während der zweite Bevorratungsbehälter 5 zur Aufnahme des Rohstoffgemenges 3 dient.

Zwischen dem ersten Bevorratungsbehälter 4 für die Scherben 2 und dem zweiten Bevorratungsbehälter 5 für das Rohstoffgemenge 3 ist eine Entnahme- und Fördervorrichtung (nachfolgend kurz Dosiervorrichtung) 6 angeordnet. Diese befördert das Rohstoffgemenge 3 direkt in den Bevorratungsbehälter 4 für die Scherben. Unter dem Auslauf 7 des ersten Bevorratungsbehälters 4 ist eine weitere Entnahmevorrichtung 8 angeordnet, die das Beschickungsgut an den Übergabepunkt der Glasschmelzanlage 1 weiterfördert.

Der erste Bevorratungsbehälter 4 wird von einem nicht dargestellten Wärmetauscher mit heißen Abgasen der Glasschmelzanlage 1 gespeist. Damit werden die Scherben 2 in dem ersten Bevorratungsbehälter 4 vorgewärmt.

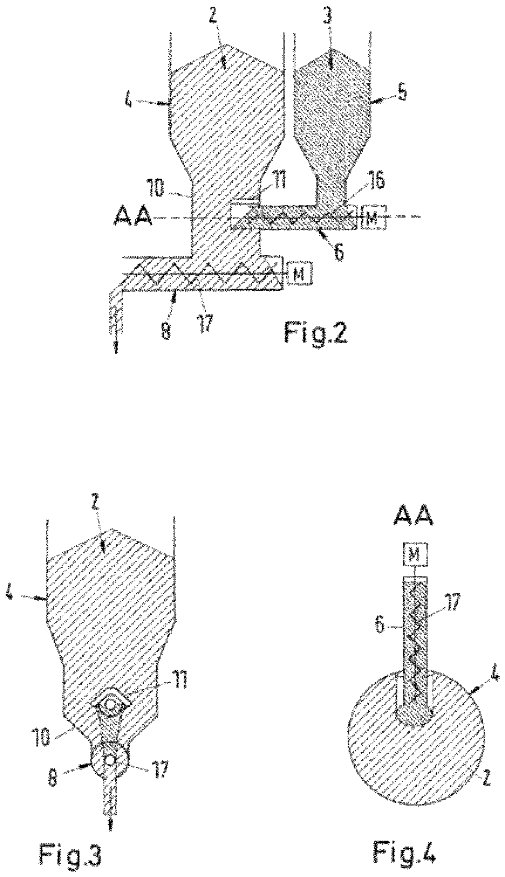

Das von oben in den zweiten Bevorratungsbehälter 5 zugegebene Rohstoffgemenge 3 rutscht darin nach unten und gelangt durch einen Auslauf 9 auf die Dosiervorrichtung 6. Diese fördert das Rohstoffgemenge 3 direkt in den Entnahmetrichter 10 des ersten Bevorratungsbehälters 4 für die Scherben 2. Die Zuführung des Rohstoffgemengestromes 3 wird, wie aus den Fig. 2 und 3 zu ersehen ist, mit einer dachförmigen Überdeckung 11 in dem Bevorratungsbehälter 4 überbaut, so dass das zwangsgeförderte Rohstoffgemenge 3 ungehindert in den Scherbenstrom 2 fallen kann.

Die Entnahme des Gemisches aus Scherben 2 und Rohstoffgemenge 3 erfolgt im Auslauf 7 des Bevorratungsbehälters 4 mittels der Entnahmevorrichtung 8. Die Gesamtentnahmemenge 13 wird geregelt durch eine Niveaumessung der Glasschmelze in der nicht näher dargestellten Glasschmelzwanne mittels einer Niveausonde 12, die positioniert ist in dem sich anschließenden Durchlaufprozess (Fertigungsmenge). Die Entnahmevorrichtung 8 fördert das Gemisch aus zudosiertem Rohstoffgemenge 3 aufgrund dessen Zuführung durch die Dosiervorrichtung 6 aus dem zweiten Bevorratungsbehälter 5 und den frei nachfließenden Scherben 2 aus dem ersten Bevorratungsbehälter 4 zum Übergabepunkt der Glasschmelzwanne. Die Entnahmevorrichtung 8 zieht bei jeder Förderung über die gleichzeitig arbeitende Dosiervorrichtung 6 stets Rohstoffgemenge 3 mit. Der restliche Bedarf an benötigter Gesamtentnahmemenge 13 wird durch freies nachfließen des Materials im dem ersten Bevorratungsbehälter 4 gedeckt.

Das Mischungsverhältnis zwischen Scherben 2 und Rohstoffgemenge 3 wird mittels eines nicht näher dargestellten und beschriebenen Prozessleitsystems 14 berechnet und überwacht. Der Anteil des Rohstoffgemenges 3 an der Gesamtentnahmemenge 13 ist frei wählbar und wird als Prozentwert der Gesamtentnahmemenge 13 in das Prozessleitsystem 14 eingegeben. Die Entnahmemenge pro Zeiteinheit für das Rohstoffgemenge 3 wird über Gewichtsmessdosen 15 erfasst, auf denen der zweite Bevorratungsbehälter 5 steht.

In den Fig. 2 bis 7 sind in Prinzipdarstellungen verschiedene Ausführungsformen der Bevorratungsbehälter und der Entnahmevorrichtungen dargestellt. Dabei sind gleiche Bauteile mit gleichen Bezugszeichen versehen.

In den Fig. 2 bis 4 wird anhand einer ersten Ausführungsform das Zusammenspiel des ersten Bevorratungsbehälters 4 für die Scherben 2 und des zweiten Bevorratungsbehälters 5 für das Rohstoffgemenge 3 mit den dazugehörigen Entnahme- und Fördervorrichtungen 6 und 8 veranschaulicht. Die Funktionsweise der Vorrichtung ist wie folgt:

Zum Beschicken von Glasschmelzanlagen mit aus Scherben und einem Gemisch aus Rohstoffgemenge bestehenden Beschickungsgut werden in den ersten Bevorratungsbehälter 4 die Glasscherben und in den zweiten Bevorratungsbehälter 5 das Rohstoffgemenge eingebracht. Das von oben eingefüllte Rohstoffgemenge 3 rutscht in dem zweiten Bevorratungsbehälter 5 nach unten und fällt durch den Auslauf 9 auf die Dosiervorrichtung 6, die mittels einer von einem Motor M angetriebenen Schnecke 16 das Rohstoffgemenge 3 direkt in den Entnahmetrichter 10 des ersten Bevorratungsbehälters 4 fördert.

Dort ist die Zuführung für das Rohstoffgemenge 3 mit einer dachförmigen Überdeckung 11 überbaut. Dadurch kann der zwangsgeförderte Rohstoffgemengestrom 3 ungehindert in den Scherbenstrom 2 fallen. Die Dosiervorrichtung 6 ist dabei so mit dem zweiten Bevorratungsbehälter 5 verbunden, dass beide nach außen abgeschlossen sind. Da auch die Zuführung für das Rohstoffgemenge zum ersten Bevorratungsbehälter 4 nach außen weitgehend abgeschlossen ist, ist die Dosiervorrichtung 6 als Ganzes ein geschlossenes System mit der Folge, dass eine Verstaubung an den Übergabepunkten weitgehend verhindert wird.

Das in dem ersten Bevorratungsbehälter 4 zusammengeführte Gemisch aus Scherben 2 und Rohstoffgemenge 3 tritt aus dem Auslauf 7 aus und wird mittels der Entnahmevorrichtung 8 zum Übergabepunkt der Glasschmelzanlage 1 gefördert. Dabei zieht die Entnahmevorrichtung 8 zusätzlich zu den in dem Behälter nach unten rutschenden Scherben 2 bei jeder Förderung über die gleichzeitig arbeitende Dosiervorrichtung 6 auch Rohstoffgemenge 3 in einem bestimmten Masseverhältnis aus dem zweiten Bevorratungsbehälter 5 mit (Zwangsführung).

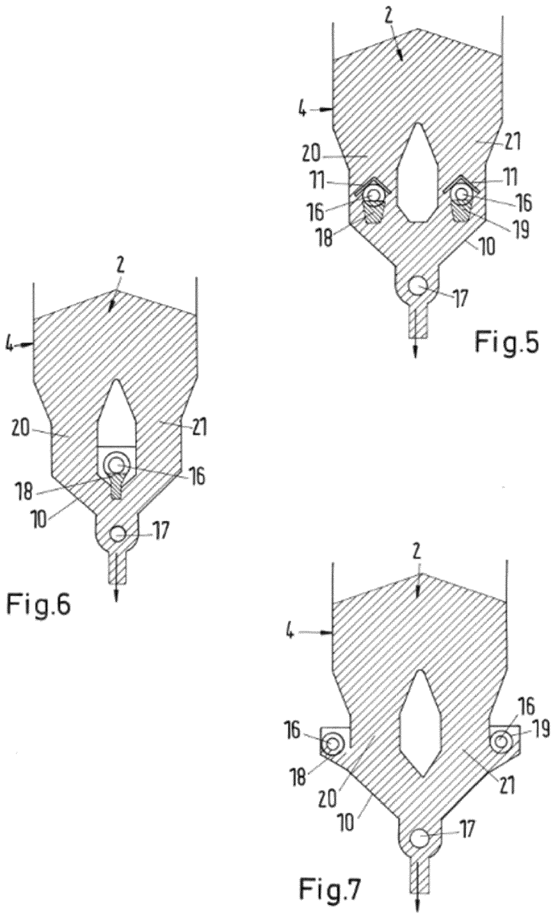

Die in den Fig. 5 bis 7 gezeigten ersten Bevorratungsbehälter 4 verjüngen sich nach unten in zwei voneinander getrennte Schächte 20 und 21, durch die Teilströme des Beschickungsguts durchgeleitet werden.

Die zweiten Bevorratungsbehälter 5 können in Abhängigkeit von der Durchsatzleistung der Glasschmelzanlagen 1 zwei oder mehr Ausläufe haben. Für jeden Auslauf in dem Bevorratungsbehälter 5 sind in dem ersten Bevorratungsbehälter 4 entsprechende Zuführungen 18 und 19 vorgesehen.

In dem in Fig. 5 gezeigten ersten Bevorratungsbehälter 4 ragen zwei von dem zweiten Bevorratungsbehälter 5 kommenden Zuführungen 18 und 19 in jeweils eine der beiden Schächte 20 und 21 des sich nach unten verjüngenden Entnahmetrichters 10. Die Zudosierung des Rohstoffgemenges 3 erfolgt bei dieser Ausführungsform in den Scherbenstrom.

In der Ausführungsform gemäß Fig. 6 erfolgt die Zudosierung des Rohstoffgemenges 3 mittig zwischen zwei Teilströme des Scherbenstroms 2. Bei dieser Ausführungsform benötigt die Zudosierung keine Überdeckung. Dies gilt in gleicher Weise für die Ausführungsform gemäß Fig. 7, bei der die Zudosierung des Rohstoffgemenges 3 seitlich zu dem Scherbenstrom 2 erfolgt.

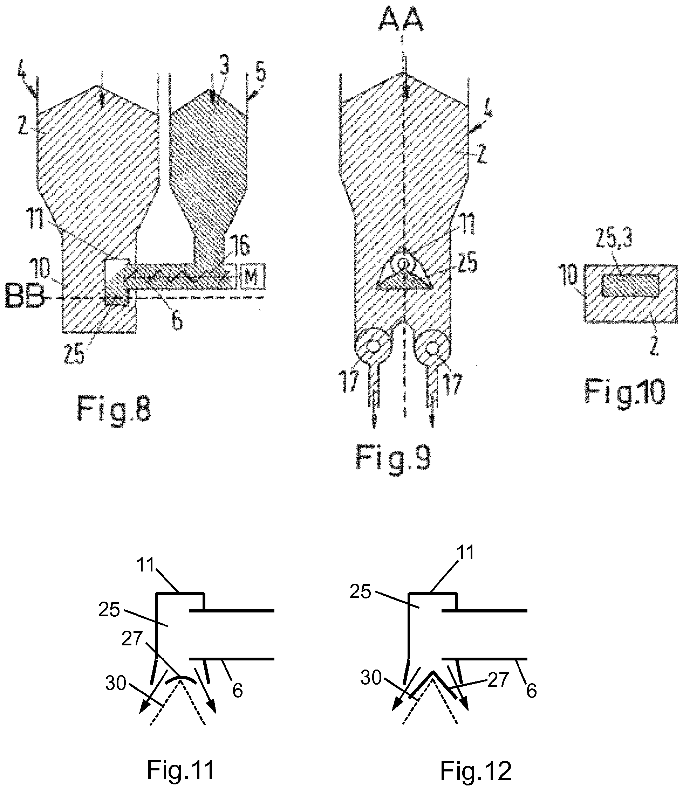

Bei der in den Fig. 8 bis 10 dargestellten Ausführungsform einer erfindungsgemäßen Beschickungsvorrichtung ist an dem Ende der Dosiervorrichtung 6, welches dem ersten Bevorratungsbehälter 4 zugewandt ist, ein Zuführkanal angeordnet, welcher den Strom des Rohstoffgemenges 3 derart umlenkt, dass dieser dem Scherbenstrom 2 in vertikaler Richtung zugeführt wird. An dem Zuführkanal ist eine Überdachung 11 vorgesehen, welche ein Abschneiden des Stroms des Rohstoffgemenges 3 durch den Scherbenstrom 2 vermeidet. Der Zuführkanal ist insbesondere trichterförmig ausgebildet (vgl. Fig. 9). Hierdurch wird ermöglicht, dass das Rohstoffgemenge 3 breiter in den Scherbenstrom 2 abgelegt wird.

Wie Fig. 9 zu entnehmen ist, besitzt diese Ausführungsform zwei in horizontaler Richtung nebeneinander liegende Entnahmevorrichtungen 8 (jeweils mit Förderschnecke 17), so dass das Gemisch über eine größere Breite in Richtung Glasschmelzanlage gefördert werden kann.

In den Fig. 11 und 12 sind Varianten der Ausgestaltung des Zuführkanals 25 dargestellt, wobei der Schnitt dem Schnitt der Fig. 8 entspricht. Jeder Zuführkanal weist an seiner Unterseite 27 eine runde (siehe Fig. 11) oder eckige (vgl. Fig. 12), nach oben gerichtete Einkerbung (Ausschnitt) auf, welche bewirkt, dass die Scherben des Scherbenstroms 2 um den Trichter des Zuführkanals 25 herum in der Weise wieder unterhalb des Zuführkanals 25 zusammenfließen, dass sich unterhalb der Abwurfstelle ein Scherbenkegel 30 (siehe gestrichelte Linien) bildet. Dieser Scherbenkegel 30 zwingt das abgeworfene Rohstoffgemenge 3 seitlich links und rechts auf dem Scherbenkegel 30 abzufließen (siehe Pfeile in Fig. 11 und 12). Hierdurch wird eine besonders gute Verteilung des Rohstoffgemenges 3 in dem Gemisch bewirkt.

### Bezugszeichenliste

- 1: Glasschmelzanlage / Glasschmelzwanne
- 2: Scherben, Scherbenstrom
- 3: Rohstoffgemenge, Rohstoffgemengestrom
- 4: erster Bevorratungsbehälter (für Scherben)
- 5: zweiter Bevorratungsbehälter (für Rohstoffgemenge)
- 6: Dosiervorrichtung (Entnahme- und Fördervorrichtung) zwischen 4 und 5
- 7: Auslauf von 4
- 8: Entnahmevorrichtung unter 7
- 9: Auslauf von 5
- 10: Entnahmetrichter von 4
- 11: dachförmige Überdeckung
- 12: Niveausonde
- 13: Gesamtentnahmemenge
- 14: Prozessleitsystem
- 15: Gewichtsmessdose
- 16: Schnecke der Dosiervorrichtung 6
- 17: Schnecke der Entnahmevorrichtung 8
- 18: Zuführung in 4
- 19: Zuführung in 4
- 20: Schacht in 4
- 21: Schacht in 4
- 25: Zuführkanal
- 27: Unterseite des Zuführkanals
- 30: Scherbenkegel

- M: Motor

## Patentansprüche

1. Verfahren zur Beschickung von Glasschmelzanlagen (1) mit aus Scherben (2) und primären Rohstoffen (Rohstoffgemenge) (3) bestehenden Schüttgütern, wobei die Schüttgüter in einem Silo bevorratet werden, in dem sie durch ihre Schwerkraft nach unten rutschen, wo sie durch einen Auslauf auf eine Fördereinrichtung gelangen, die sie zur Glasschmelzanlage (1) fördert,
wobei das Silo aus zwei getrennten Bevorratungsbehältern (4, 5) besteht, von denen der erste Bevorratungsbehälter (4) die Scherben (2) und der zweite Bevorratungsbehälter (5) das Rohstoffgemenge (3) aufnehmen,
**dadurch gekennzeichnet, dass** das Rohstoffgemenge (3) mittels einer unterhalb des Auslaufs (9) des zweiten Bevorratungsbehälters (5) angeordneten Dosiervorrichtung (6) in den ersten Bevorratungsbehälter (4) für die Scherben zwangsgefördert wird (Zudosierung),
dass aus dem Auslauf (7) des ersten Bevorratungsbehälters (4) ein Gemisch aus den in dem ersten Bevorratungsbehälter (4) bevorrateten Scherben (2) und dem aus dem zweiten Bevorratungsbehälter (5) zugeführten Rohstoffgemenge (3) austritt und die so zusammengeführten beiden Komponenten des Schmelzguts mittels mindestens einer Entnahmevorrichtung (8) zum Übergabepunkt der Glasschmelzanlage (1) gefördert werden und dass dem ersten Bevorratungsbehälter (4) für die Scherben (2) über einen Wärmetauscher aus den heißen Abgasen der Glasschmelzanlage (1) Wärme zugeführt wird, wodurch die Scherben (2) vorgewärmt werden.

2. Verfahren nach Anspruch 1, **dadurch gekennzeichnet, dass** die Entnahmevorrichtung (8) unterhalb des ersten Bevorratungsbehälters (4) zusätzlich zu den in dem Behälter nach unten rutschenden Scherben (2) bei jeder Förderung über die gleichzeitig arbeitende Dosiervorrichtung (6) auch Rohstoffgemenge (3) in einem bestimmten Masseverhältnis aus dem zweiten Bevorratungsbehälter (5) mitzieht.

3. Verfahren nach Anspruch 1, **dadurch gekennzeichnet, dass** die Gesamtentnahmemenge (13) des Gemisches aus Scherben (2) und Rohstoffgemenge (3) durch eine Messung des Niveaus der Glasschmelze in der Glasschmelzwanne (1) mittels einer Niveausonde (12) während des in dem sich anschließenden kontinuierlich arbeitenden Durchlaufprozess (Fertigungsmenge) geregelt wird.

4. Verfahren nach Anspruch 1, **dadurch gekennzeichnet, dass** der restliche Bedarf der Gesamtentnahmemenge (13) durch freies Nachfließen des Materials im dem ersten Bevorratungsbehälter (4) gedeckt wird.

5. Verfahren nach Anspruch 1, **dadurch gekennzeichnet, dass** die Zudosierung des aus dem zweiten Bevorratungsbehälter (5) zwangsgeförderten Rohstoffgemenges (3) in den Entnahmetrichter (10) des ersten Bevorratungsbehälters (4) erfolgt.

6. Vorrichtung zur Beschickung von Glasschmelzanlagen (1) mit aus Scherben (2) und primären Rohstoffen (Rohstoffgemenge) (3) bestehenden Schüttgütern, mit einem Silo für das Beschickungsgut und mit einer Fördereinrichtung zur Zuführung des Beschickungsguts in die Glasschmelzanlage (1), insbesondere nach Anspruch 1,
wobei das Silo aus zwei getrennten Bevorratungsbehältern (4, 5) besteht, wobei der ersten Bevorratungsbehälter (4) für die Scherben (2) und der zweite Bevorratungsbehälter (5) für das Rohstoffgemenge (3) vorgesehen sind,
**dadurch gekennzeichnet, dass** zwischen dem ersten Bevorratungsbehälter (4) und dem zweiten Bevorratungsbehälter (5) eine Dosiervorrichtung (6) für die Zudosierung des Rohstoffgemenges (3) in den ersten Bevorratungsbehälter (4) angeordnet ist,
dass unter dem Auslauf (7) des ersten Bevorratungsbehälters (4) mindestens eine Entnahmevorrichtung (8) für das Gemisch aus den in dem ersten Bevorratungsbehälter bevorraten Scherben (2) und dem aus dem zweiten Bevorratungsbehälter (5) zugeführten Rohstoffgemenge (3) angeordnet ist, mit der die beiden zusammengeführten Komponenten des Schmelzguts zum Übergabepunkt der Glasschmelzanlage (1) gefördert werden und dass der erste Bevorratungsbehälter (4) für die Scherben (2) einen Wärmetauscher aufweist, der mit den heißen Abgasen der Glasschmelzanlage (1) gespeist wird.

7. Vorrichtung nach Anspruch 6, **dadurch gekennzeichnet, dass** die Entnahmevorrichtung (8) des ersten Bevorratungsbehälters (4) bei jeder Förderung über die gleichzeitig arbeitende Dosiervorrichtung (6) Rohstoffgemenge (3) aus dem zweiten Bevorratungsbehälter (5) mitzieht.

8. Vorrichtung nach Anspruch 6, **dadurch gekennzeichnet, dass** die Dosiervorrichtung (6) nach außen abgeschlossen und staubdicht ist.

9. Vorrichtung nach Anspruch 6, **dadurch gekennzeichnet, dass** in dem ersten Bevorratungsbehälter (4) für die Scherben die Dosiervorrichtung für das Rohstoffgemenge (3) mit einer dachförmigen Überdeckung (11) überbaut ist.

10. Vorrichtung nach Anspruch 6, **dadurch gekennzeichnet, dass** der zwangsgeförderte Rohstoffgemengestrom (3) ungehindert in den Scherbenstrom (2) im ersten Bevorratungsbehälter (4) fällt.

11. Vorrichtung nach Anspruch 6, **dadurch gekennzeichnet, dass** der zweite Bevorratungsbehälter (5) für das Rohstoffgemenge über zwei oder mehr Ausläufe (18, 19) verfügt.

12. Vorrichtung nach Anspruch 6, **dadurch gekennzeichnet, dass** für jeden Auslauf (9) des zweiten Bevorratungsbehälters (5) in dem entsprechenden ersten Bevorratungsbehälter (4) eine Zuführung (18, 19) für die Zudosierung des Rohstoffgemenges (3) ausgebildet ist.

13. Vorrichtung nach einem der vorhergehenden Ansprüche 6-12 **dadurch gekennzeichnet, dass** sich der erste Bevorratungsbehälter (4) nach unten in zwei oder mehr voneinander getrennte Schächte (20, 21) zur Durchleitung von Teilströmen des Beschickungsguts verjüngt.

14. Vorrichtung nach einem der vorhergehenden Ansprüche 6-13 **dadurch gekennzeichnet, dass** die Zudosierung des Rohstoffgemenges (3) direkt in den Scherbenstrom (2) und/oder zwischen zwei Teilströmen (20, 21) des Scherbenstroms (2) mittig oder seitlich zum Scherbenstrom (2) erfolgt.

15. Vorrichtung nach einem der vorhergehenden Ansprüche 6-14 **dadurch gekennzeichnet, dass** die Dosiervorrichtung einen trichterförmigen Zuführkanal (25) aufweist, welcher das Rohstoffgemenge in vertikale Richtung lenkt und dem Scherbenstrom (2) vertikal zuführt.

## Claims

1. A method for feeding glass melting plants (1) with bulk materials consisting of shards (2) and primary raw materials (raw material mixture) (3), wherein the bulk materials are stored in a silo in which they slide downwards due to their gravitational force, where they move through an outlet onto a conveyor which conveys them to the glass melting plant (1),
wherein the silo is composed of two separate storage containers (4, 5) of which the first storage container (4) accommodates the shards (2) and the second storage container (5) accommodates the raw material mixture (3),
**characterized in that** the raw material mixture (3) is force-conveyed into the first storage container (4) for shards by means of a dosing device (6) arranged below the outlet (9) of the second storage container (5) (metered addition),
that a mixture of the shards (2) stored in the first storage container (4) and the raw material mixture (3) fed from the second storage container (5) exits from the outlet (7) of the first storage container (4), and the two components of the melt material thus brought together are conveyed to the delivery point of the glass melting plant (1) by means of a withdrawal device (8), and that heat from the hot exhaust gases of the glass melting plant (1) is fed to the first storage container (4) for the shards (2) so that the shards (2) are preheated.

2. The method according to claim 1, **characterized in that** with each conveying step via the simultaneously operating dosing device (6), the withdrawal device (8) below the first storage container (4) carries along, in addition to the shards (2) sliding downwards in the container, raw material (3) in a particular mass ratio from the second storage container (5).

3. The method according to claim 1, **characterized in that** the overall withdrawn quantity (13) of the mixture of shards (2) and raw material mixture (3) is regulated by measuring the level of the glass melt in the glass melt tub (1) by means of a level sensor (12) during the subsequent continuously operating throughput process (production quantity).

4. The method according to claim 1, **characterized in that** the remaining demand of the overall withdrawn quantity (13) is covered by free continuous flow of the material in the first storage container (4).

5. The method according to claim 1, **characterized in that** the metered addition of the raw material mixture (3) force-conveyed from the second storage container (5) is performed by feeding it into the withdrawal funnel (10) of the first storage container (4).

6. A device for feeding glass melting plants (1) with bulk materials consisting of shards (2) and primary raw materials (raw material mixture) (3), comprising a silo for the feeding material and comprising a conveyor for supplying the feeding material into the glass melting plant (1), in particular according to claim 1,
wherein the silo is composed of two separate storage containers (4, 5), wherein the first storage container (4) is provided for the shards (2) and the second storage container (5) is provided for the raw material mixture (3),
**characterized in that** a dosing device (6) for metered addition of the raw material mixture (3) into the first storage container (4) is arranged between the first storage container (4) and the second storage container (5),
that below the outlet (7) of the first storage container (4) there is arranged at least one withdrawal device (8) for the mixture of the shards (2) stored in the first storage container and the raw material mixture (3) fed from the second storage container (5), by means of which withdrawal device the two combined components of the melt material are conveyed to the delivery point of the glass melting plant (1), and that the first storage container (4) for the shards (2) has a heat exchanger which is supplied with hot exhaust gases of the glass melting plant (1).

7. The device according to claim 6, **characterized in that** with each conveying step via the simultaneously operating dosing device (6), the withdrawal device (8) of the first storage container (4) carries along raw material mixture (3) from the second storage container (5).

8. The device according to claim 6, **characterized in that** the dosing device (6) is sealed and dust-tight with respect to the outside.

9. The device according to claim 6, **characterized in that** the dosing device for the raw material mixture (3) is covered by a roof-shaped cover (11) within the first storage container (4) for the shards.

10. The device according to claim 6, **characterized in that** the force-conveyed raw material mixture flow (3) falls unhindered into the shard flow (2) in the first storage container (4).

11. The device according to claim 6, **characterized in that** the second storage container (5) for the raw material mixture has two or more outlets (18, 19).

12. The device according to claim 6, **characterized in that** for each outlet (9) of the second storage container (5), a supply line (18, 19) for metered addition of the raw material mixture (3) is formed in the corresponding first storage container (4).

13. The device according to any one of the preceding claims 6 - 12, **characterized in that** the first storage container (4) tapers downwards into two or more separate shafts (20, 21) for conducting partial flows of the feeding material.

14. The device according to any one of the preceding claims 6 - 13, **characterized in that** the metered addition of the raw material mixture (3) is fed directly into the shard flow (2) and/or centrally between two partial flows (20, 21) of the shard flow (2) or laterally with respect to the shard flow (2).

15. The device according to any of the preceding claims 6 - 14, **characterized in that** the dosing device has a funnel-shaped supply channel (25) which deflects the raw material mixture in a vertical direction and feeds it vertically to the shard flow (2).

## Revendications

1. Procédé destiné au chargement dans des fours verriers (1) de produits en vrac constitués de calcin (2) et de matières premières primaires (mélange de matières premières) (3), les produits en vrac étant stockés dans un silo, dans lequel, sous l'effet de leur force de gravité, ils glissent vers le bas, où via une sortie, ils arrivent sur un système de convoyage qui les convoie vers le four verrier (1)
le silo étant constitué de deux conteneurs de stockage (4, 5) séparés, dont le premier conteneur de stockage (4) reçoit le calcin (2) et le second conteneur de stockage (5) reçoit le mélange de matières premières (3),
**caractérisé en ce qu'**à l'aide d'un dispositif de dosage (6) placé en-dessous de la sortie (9) du second conteneur de stockage (5), le mélange de matières premières (3) est soumis à un convoyage forcé dans le premier conteneur de stockage (4) pour le calcin (alimentation dosée),
**en ce que** de la sortie (7) du premier conteneur de stockage (4) s'échappe un mélange du calcin (2) stocké dans le premier conteneur de stockage (4) et du mélange de matières premières (3) alimenté à partir du second conteneur de stockage (5) et **en ce que** les deux composants ainsi réunis du produit de fusion sont convoyés à l'aide d'au moins un dispositif de prélèvement (8) vers le point de transfert du four verrier (1) et **en ce que** dans le premier conteneur de stockage (4) pour le calcin (2) est alimentée par l'intermédiaire d'un échangeur thermique de la chaleur des gaz de fumée chauds du four verrier (1), ce qui a pour effet de préchauffer le calcin (2).

2. Procédé selon la revendication 1, **caractérisé en ce qu'**en-dessous du premier conteneur de stockage (4), en supplément du calcin (2) glissant vers le bas dans le conteneur, à chaque convoyage, par l'intermédiaire du dispositif de dosage (6) fonctionnant simultanément, le dispositif de prélèvement (8) entraîne également du mélange de matières premières (3) dans un rapport en masse défini hors du second conteneur de stockage (5).

3. Procédé selon la revendication 1, **caractérisé en ce que** la quantité totale (13) prélevée du mélange de calcin (2) et de mélange de matières premières (3) est régulée par une mesure du niveau de la masse de verre fondue dans la cuve (1) de masse de verre fondue à l'aide d'une sonde de niveau (12) pendant le processus de passage (quantité fabriquée) suivant, fonctionnant en continu.

4. Procédé selon la revendication 1, **caractérisé en ce que** le besoin résiduel en quantité totale (13) prélevée est couvert par un post-écoulement libre de la matière dans le premier conteneur de stockage (4).

5. Procédé selon la revendication 1, **caractérisé en ce que** l'alimentation par dosage du mélange de matières premières (3) soumis à un convoyage forcé hors du second conteneur de stockage (5) s'effectue dans la trémie de prélèvement (10) du premier conteneur de stockage (4).

6. Dispositif destiné au chargement dans des fours verriers (1) de produits en vrac constitués de calcin (2) et de matières premières primaires (mélange de matières premières)(3), avec un silo pour la produit à charger et avec un système de convoyage destiné à alimenter le produit à charger dans le four verrier (1), notamment selon la revendication 1,
le silo étant constitué de deux conteneurs de stockage (4, 5), le premier conteneur de stockage (4) étant prévu pour le calcin (2) et le second conteneur de stockage (5) étant prévu pour le mélange de matières premières (3),
**caractérisé en ce qu'**entre le premier conteneur de stockage (4) et le second conteneur de stockage (5) est placé un dispositif de dosage (6) pour l'alimentation dosée du mélange de matières premières (3) dans le premier conteneur de stockage (4),
**en ce que** sous la sortie (7) du premier conteneur de stockage (4) est placé un dispositif de prélèvement (8) pour le mélange du calcin (2) stocké dans le premier conteneur de stockage et du mélange de matières premières (3) alimenté à partir du second conteneur de stockage (5), avec lequel les deux composants réunis de la masse fondue sont convoyés vers le point de transfert du four verrier (1) et **en ce que** le premier conteneur de stockage (4) pour le calcin (2) comporte un échangeur thermique qui est alimenté avec les gaz de fumée chauds du four verrier (1).

7. Dispositif selon la revendication 6, **caractérisé en ce qu'**à chaque convoyage, par l'intermédiaire du dispositif de dosage (6) fonctionnant simultanément, le dispositif de prélèvement (8) du premier conteneur de stockage (4) entraîne du mélange de matières premières (3) hors du deuxième conteneur de stockage (5).

8. Dispositif selon la revendication 6, **caractérisé en ce que** le dispositif de dosage (6) est fermé sur l'extérieur et étanche à la poussière.

9. Dispositif selon la revendication 6, **caractérisé en ce que** dans le premier conteneur de stockage (4) pour le calcin, sur le dispositif de dosage pour le mélange de matières premières (3) est érigé un recouvrement (11) en forme de toit.

10. Dispositif selon la revendication 6, **caractérisé en ce que** le flux de mélange de matières premières (3) soumis à un convoyage forcé tombe sans entrave dans le flux de calcin (2) dans le premier conteneur de stockage (4).

11. Dispositif selon la revendication 6, **caractérisé en ce que** le second conteneur de stockage (5) pour le mélange de matières premières dispose de deux ou de plusieurs sorties (18, 19).

12. Dispositif selon la revendication 6, **caractérisé en ce que** pour chaque sortie (9) du deuxième conteneur de stockage (5), il est conçu dans le premier conteneur de stockage (4) correspondant une alimentation (18, 19) pour l'alimentation dosée du mélange de matières premières (3).

13. Dispositif selon l'une quelconque des revendications 6 à 12 précédentes, **caractérisé en ce que** le premier conteneur de stockage (4) se rétrécit vers le bas dans deux ou dans plusieurs puits (20, 21) séparés les uns des autres, pour faire traverser des flux partiels du produit à charger.

14. Dispositif selon l'une quelconque des revendications 6 à 13 précédentes, **caractérisé en ce que** l'alimentation dosée du mélange de matières premières (3) s'effectue directement dans le flux de calcin (2) et/ou entre deux flux partiels (20, 21) du flux de calcin (2) au centre ou latéralement par rapport au flux de calcin (2).

15. Dispositif selon l'une quelconque des revendications 6 à 14 précédentes, **caractérisé en ce que** le dispositif de dosage comporte un canal d'alimentation (25) en forme de trémie qui guide le mélange de matière premières en direction verticale et l'alimente à la verticale vers le flux de calcin (2).
